# EUROPEAN PATENT APPLICATION

(11) **EP 4 000 969 A2**
(43) Date of publication of application: **25.05.2022**
(21) Application number: 21208648.2
(22) Date of filing: 16.11.2021
(51) Int. Cl.: B60G 3/01

(54) **RETROFIT FOR FARM EQUIPMENT**

(30) Priority: 16.11.2020 US 202017099252
(71) Applicant: Simon, Steve N.G., Rodney, Ontario N0L 2C0 (CA)
(72) Inventor: Simon, Steve N.G., Rodney, Ontario N0L 2C0 (CA)
(74) Representative: Ström & Gulliksson AB

(57) **Abstract**

Systems and methods relating to the replacement of specific parts in farm equipment to thereby adjust the farm equipment's capabilities. To modify the ground clearance of farm equipment, especially sprayers with a strut type suspension, the spindles of the suspension system along with the air spring absorber are replaced. The original spindles are replaced with longer spindles while the air spring absorber is replaced with one that allows for an increased range of travel. As well, the fixed length linkage arms that connect the air height control valves to the suspension system may be replaced with longer arms. These longer linkage arms may be of a fixed length or they may be of an adjustable length. Alternatively, a replacement bracket may be used to allow for the reuse of the original linkage arm.

## Description

### TECHNICAL FIELD

The present invention relates to farm equipment. More specifically, the present invention relates to the retrofitting of farm equipment to result in more useful equipment.

### BACKGROUND

Advances in farming equipment have increased their efficiency, productivity, and have lowered their prices. Such advances have allowed farmers to accomplish more with the various forms of farm machinery. However, farm machinery built for one type of crop may not be suitable for other types of crops. As an example, one type of crop may require farm machinery to have a certain minimum ground clearance while other types of crops may require a different ground clearance.

The above is true for, among other types of farm machinery, sprayers. Some types of crops require sprayers to be above the resulting crops while others need to have the sprayers closer to the ground. Unfortunately, most farm equipment, including sprayers, do not have configurable ground clearances. This deficiency has led to farmers needing to purchase different farm equipment for different crops, with a corresponding increase in the costs of planting different crops.

There is therefore a need for systems, methods, or devices that will allow for a retrofit of existing farm equipment to allow such equipment to be used for different crops of different heights.

### SUMMARY

The present invention provides systems and methods relating to the replacement of specific parts in farm equipment to thereby adjust the farm equipment's capabilities. To modify the ground clearance of farm equipment, especially sprayers with a strut type suspension, the spindles of the suspension system along with the air spring absorber are replaced. The original spindles are replaced with longer spindles while the air spring absorber is replaced with one that allows for an increased range of travel. As well, the fixed linkage arms that connect the air height control valves to the suspension system are also replaced with longer arms. These longer linkage arms may be of a fixed length or they may be of an adjustable length.

In a first aspect, the present invention provides a kit for retrofitting farm equipment, said farm equipment having a suspension system that includes original spindles, original spring mechanisms, and at least one original linkage arm, the kit comprising:
- at least one pair of replacement spindles for replacing said original spindles, said replacement spindles being longer than said original spindles;
- at least one replacement spring mechanism for replacing said original spring mechanisms on said suspension system;
wherein
- after said kit has been installed on said farm equipment, said farm equipment has a higher ground clearance;
- said higher ground clearance is partially due to more travel by said suspension system when said at least one replacement spring mechanism has been installed.

In a second aspect, the present invention provides a method for retrofitting farm equipment, the method comprising:
- locating at least one original spindle installed on said farm equipment, said at least one original spindle being installed on a suspension system of said farm equipment;
- removing said at least one original spindle;
- replacing said at least one original spindle with at least one replacement spindle, said at least one replacement spindle being longer than said at least one original spindle;
- locating at least one original spring mechanism installed as part of said suspension system on said farm equipment;
- replacing said at least one original spring mechanism with at least one replacement spring mechanism, said at least one replacement spring mechanism allowing more travel of said suspension system than said at least one original spring mechanism.

### BRIEF DESCRIPTION OF THE DRAWINGS

The embodiments of the present invention will now be described by reference to the following figures, in which identical reference numerals in different figures indicate identical elements and in which:
**FIGURE 1** is an exploded view of a strut-type suspension system for farm equipment;
**FIGURE 2** is an exploded view of an automatic air hose assembly for farm equipment;
**FIGURE 3** illustrates an original spindle and a longer replacement spindle;
**FIGURE 4A** shows a replacement bracket in use with an original linkage arm;
**FIGURE 4B** shows a replacement bracket in use with a linear actuator;
**FIGURE 4C** illustrates a replacement bracket in used with a pneumatic linear actuator;
**FIGURE 4D** shows another view of the replacement bracket and pneumatic linear actuator of Figure 4C;
**FIGURE 4E** shows a further view of the pneumatic linear actuator and replacement bracket of Figure 4C;
**FIGURE 4F** illustrates a replacement bracket which may be used with some implementations of the present invention;
**FIGURE 5** illustrates an original linkage arm and a longer replacement linkage arm;
**FIGURE 6** illustrates an electrical linear actuator which may be used with the present invention;
**FIGURE 7** shows a suspension system that has been retrofitted according to one aspect of the present invention;
**FIGURE 8** is a view of the retrofitted suspension system according to one aspect of the invention; and
**FIGURE 9** illustrates a self-propelled sprayer farm equipment on which the various aspects of the present invention may be practiced.

### DETAILED DESCRIPTION

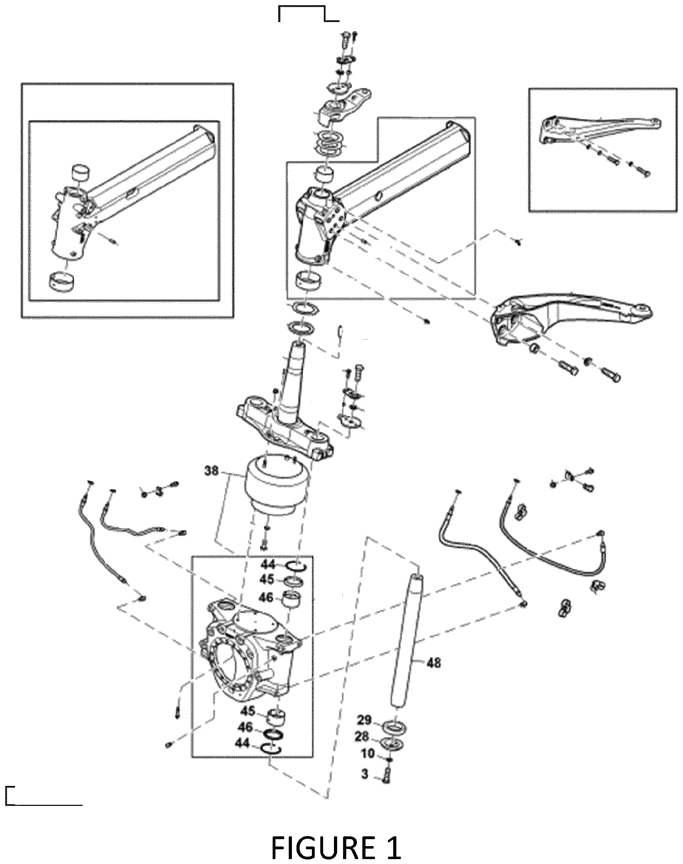

Referring to Figure 1, an exploded view of a right hand side suspension system for a self-propelled sprayer is illustrated. The suspension system illustrated in Figure 1 is a strut-based system and can be described as a dual strut air spring suspension. As can be seen in Fig. 1, an original spindle 48 is illustrated. To adjust the clearance height of the self-propelled sprayer, both original spindles are to be replaced with longer replacement spindles. The length of the replacement spindles, and thus the final adjusted height of the sprayer, may be controlled by a travel limiting device such as a spacer, bumper, or stop on or near the replacement spindle. Depending on the implementation, o-rings, bushings, screws, bolts, nuts, and spacers (such as components 44, 45, 46, 28, 29, 10, and 3) may be used to fix the replacement spindle in the suspension system as well as to control the final adjusted height of the sprayer. Since the replacement spindle would be one component that controls the distance allowed for the suspension system to move up and down, a suitable device that limits the travel of the suspension system, such as a spacer or a bumper, can be used to limit how far this distance is.

Also to be replaced is the original air spring 38. This air spring 38, also known as an absorber or a spring mechanism, is to be replaced with a replacement air spring or absorber that allows for greater or further travel than the original air spring. As with the spindles, a travel limiting device, such as a suitable bumper or spacer or stop, can also be used to control how far the suspension system travels or moves up and down. Installing a suitable spacer or bumper can limit the amount of travel that the suspension system can undergo.

It should be clear that Figure 1 illustrates only one strut suspension assembly. A corresponding left hand side suspension assembly would also need to have its spindles replaced along with the corresponding absorber.

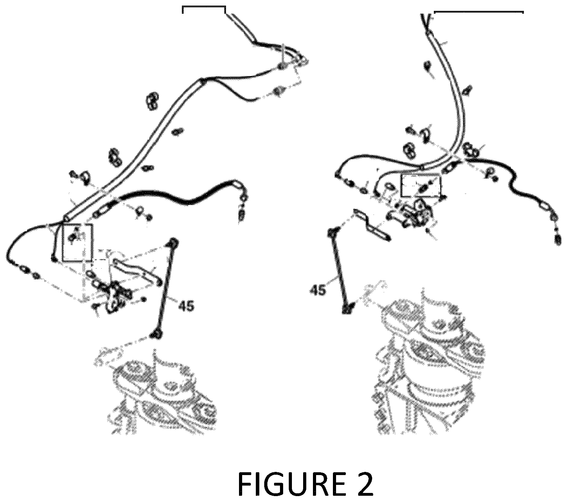

In addition to the above components, the original linkage arms that link the automatic air height control valve assembly to the air spring in the suspension system must also be replaced with longer linkage arms. Referring to Figure 2, an exploded view of the automatic air height control valve assembly is illustrated. The original linkage arms 45 in the figure are clearly illustrated and these would need to be replaced. It should be noted that current designs of sprayers use fixed length linkage arms. However, these linkage arms can be replaced with other fixed length linkage arms or adjustable linkage arms. As well, adjustable replacement linkage arms can be mechanical, pneumatic, or electrical type linkage arms. Depending on the configuration, these adjustable replacement linkage arms may be extended or shortened from within the driver's cab of the sprayer. Similarly, the adjustable replacement linkage arms may be adjusted from outside the driver's cab. In one implementation, each linkage arm was replaced by a linear actuator. Depending on the implementation and the configuration of the linkage arms, custom brackets may need to be used to attach the replacement linkage arm to the points where the original linkage arms were attached. As noted previously, linear actuators may be used as replacement linkage arms. Using linear actuators would allow for better control of the length of the replacement linkage arm.

In another implementation, the original linkage arms are not replaced but the bracket attaching the original linkage arms is replaced to allow for the greater ground clearance height. This may be done by installing a replacement bracket that has multiple attachment points to allow for greater ground clearance heights for the farm equipment. Of course, such brackets may also be used with the longer replacement linkage arms for even larger ground clearance heights.

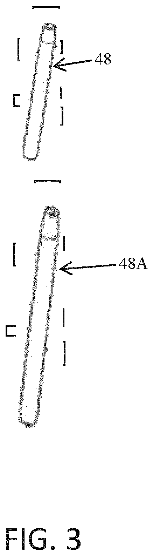

It should be clear that the original spindle and the replacement spindle have the same dimensions except for length. As can be seen in Fig. 3, the original spindle 48 and the replacement spindle 48A are similar in size except for length, with the replacement spindle being longer. The widths of the two spindles are to be as identical as possible to ensure that the original spindle 48 can be replaced with the replacement spindle 48A. As noted above, other components such as brackets, braces, nuts, and spacers may be used to secure the replacement spindle and to control the allowed travel for the suspension system.

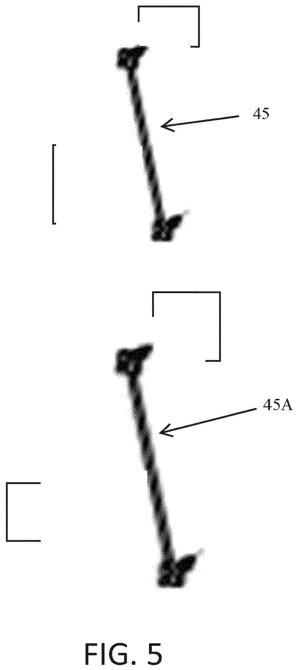

Referring to Figure 5, the original linkage arm 45 and the replacement linkage arm 45A should, much like the spindles, be as identical as possible except for length. The original linkage arm 45 and the replacement linkage arm 45A are to be as identical as possible except that the replacement linkage arm 45A is to be longer than the original linkage arm 45. This is to accommodate the greater clearance height for the retrofitted farm equipment. As noted above, both the linkage arm 45 and the replacement linkage arm 45A are of a fixed length.

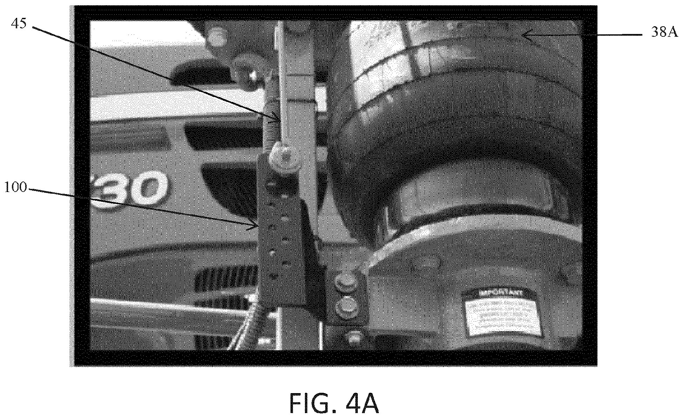

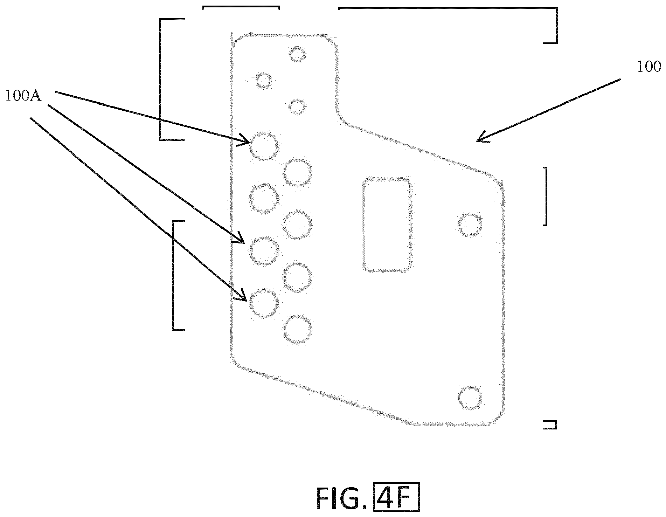

Referring to Figure 4F, a replacement bracket 100 is illustrated. As noted above, the replacement bracket has multiple attachment points 100A to allow for different configured ground clearance heights for the farm equipment. In one implementation, the original linkage arm is used, and the replacement bracket allows for the original linkage arm 45 to simply be attached to the suspension system at a higher point than the original configuration. This allows for the greater clearance height of the farm equipment without replacing the linkage arm. Referring to Figure 4A, such an implementation is illustrated with an original linkage arm being used in conjunction with a replacement bracket 100 and a replacement air spring 38A. As can be seen in Figure 4A, the linkage arm is attached at a higher point in the bracket 100 to allow for a larger clearance height.

It should, however, be clear that, instead of a replacement bracket 100, an original bracket may be used in conjunction with a replacement linkage arm that is longer than the original linkage arm. The longer length of the replacement linkage arm accommodates the greater clearance height of the farm equipment.

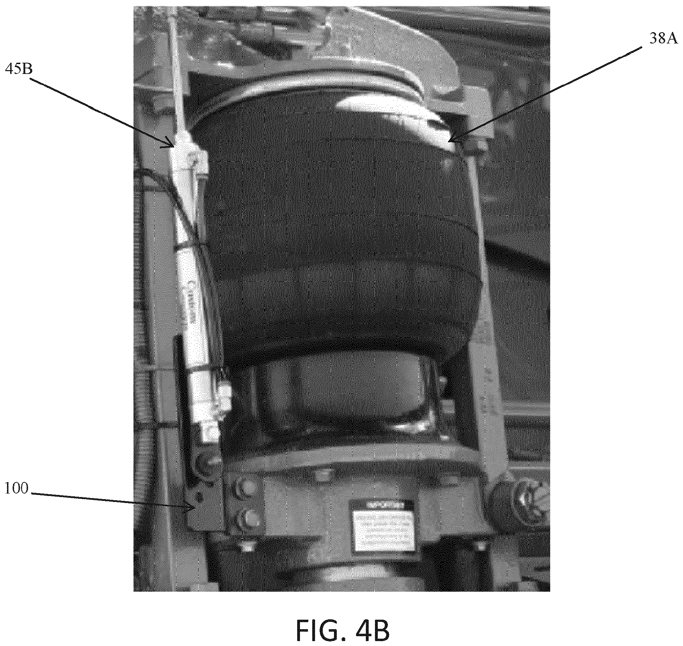

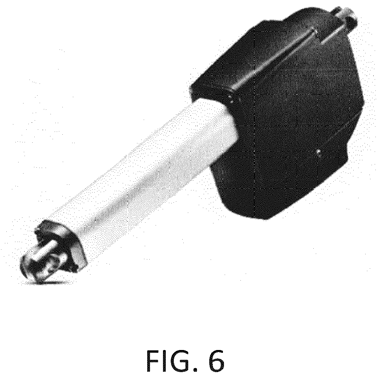

In a further variant of the present invention, instead of a fixed length linkage arm, a linear actuator may be used in place of the original linkage arm. This may be used in conjunction with a replacement bracket to allow for a controllable clearance height. Referring to Figure 4B, such an implementation is illustrated. As can be seen, a replacement air spring 38A is used along with a replacement bracket 100, and a linear actuator 45B. The linear actuator 45B takes the place of a fixed length linkage arm. This allows for clearance height configurability from the cabin of the farm equipment. An electrical linear actuator that may be used in place of the fixed length linkage arm is also illustrated in Figure 6.

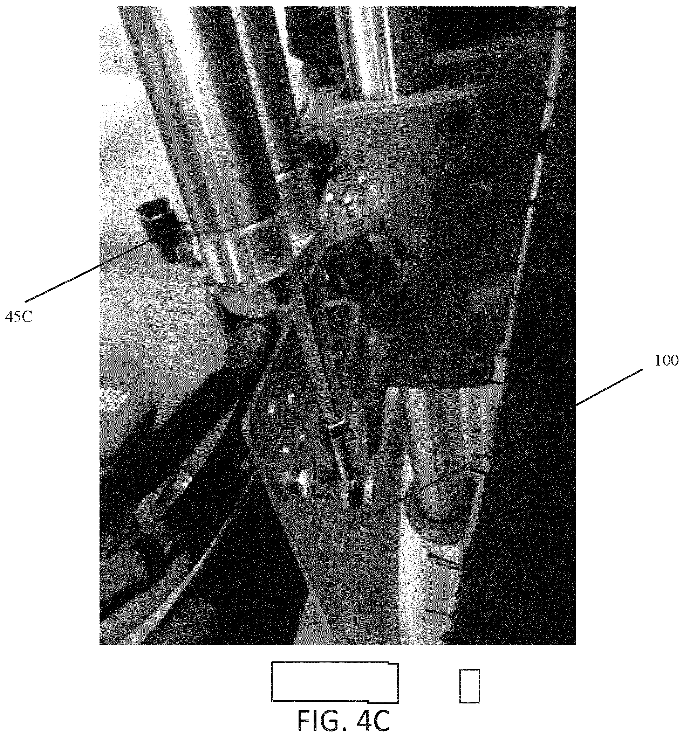

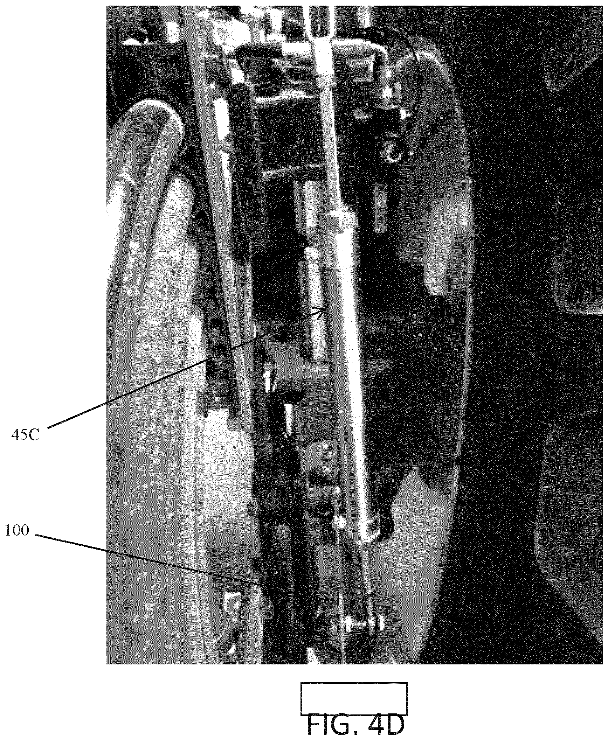

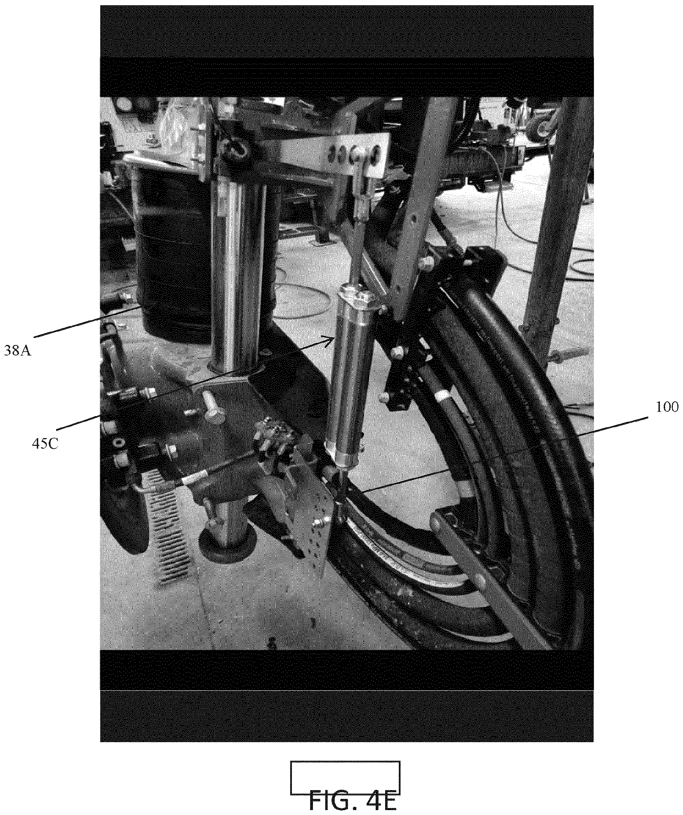

Referring to Figures 4C-4E, a further variant of the present invention is illustrated. As can be seen from Figures 4C-4E, a replacement bracket 100 is used in conjunction with a pneumatic linear actuator 45C to provide adjustability in terms of the ground clearance of the farm equipment. Figures 4C and 4D show the replacement bracket and the pneumatic linear actuator installed on a right wheel suspension of a piece of farm equipment and the wheel itself can be seen to the right of the pneumatic linear actuator. Figure 4E shows the replacement bracket and the pneumatic linear actuator installed on a left wheel assembly of the farm equipment with the wheel not present.

To retrofit a single self-propelled sprayer, each corner or wheel or strut type suspension of the sprayer would need to have its original spindles and absorber replaced. This retrofit may also involve replacing the original linkage arm and/or the bracket attaching the linkage arm to the suspension system. Since each wheel would need two replacement spindles and one replacement absorber, a single sprayer would thus need eight replacement spindles and four replacement absorbers. As well, since each wheel would need one replacement bracket and/or a replacement linkage arm, each sprayer would further need four replacement brackets and/or four replacement linkage arms.

Of course, the replacement spindles, air spring/absorbers, and linkage arms will need to be at least as sturdy as the original parts.

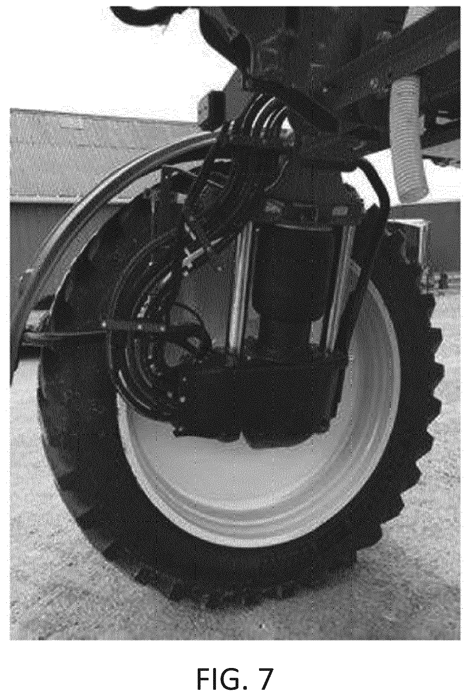

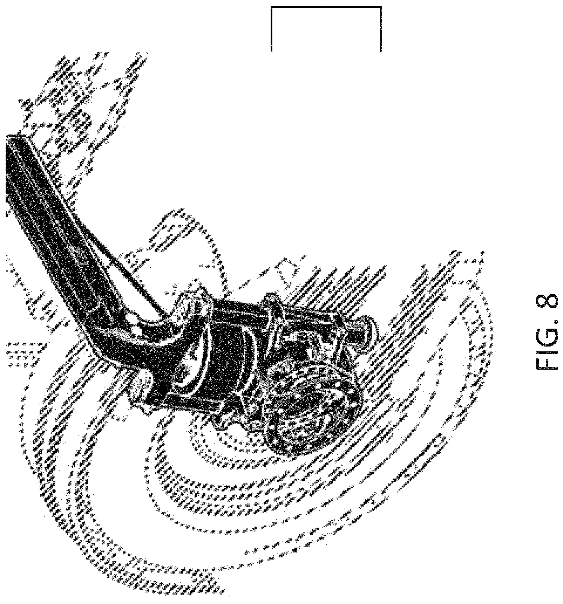

In another embodiment of the invention, the components needed to replace the relevant parts noted above can be assembled as a kit with a suitable set of instructions. Accordingly, such a kit would have eight replacement spindles and four replacement air springs. Additionally, each kit may contain four replacement brackets and/or four replacement linkage arms. Of course, each of the replacement linkage arms may be a longer replacement linkage arm or a linear actuator. A retrofitted suspension system is illustrated in Figure 7. Another illustration of a retrofitted suspension system is illustrated in Figure 8.

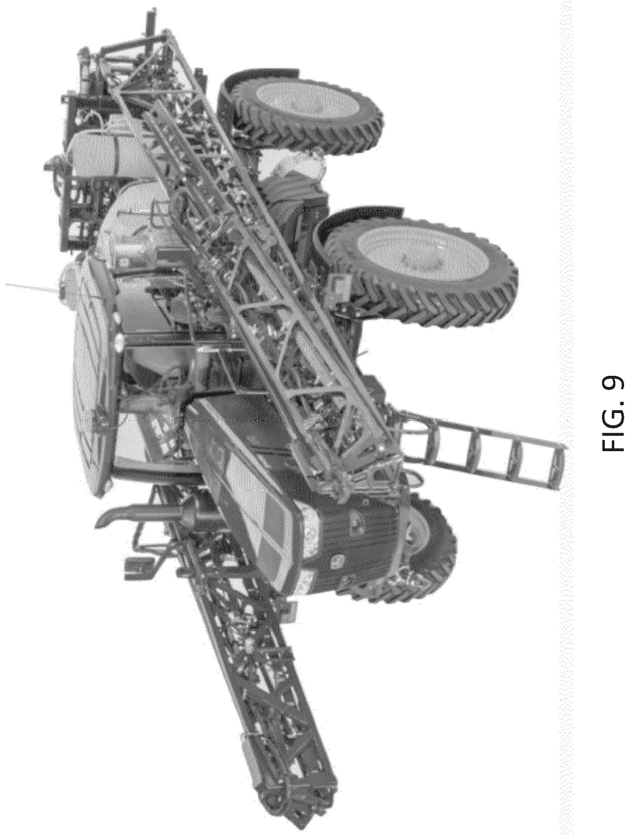

It should also be noted that while the above description and the accompanying figures applies to self-propelled sprayers (as shown in Figure 9), other farm equipment may also be retrofitted or adjusted in a similar manner. Any farm equipment that uses a strut type suspension system can have its ground clearance adjusted by locating the spindles that control the distance that the suspension system travels as well as the "shock absorbers" or spring mechanisms that also control the distance that the suspension system travels, and replacing these components. The spindles would be replaced by longer spindles while the spring mechanisms would be replaced by similar spring mechanisms that allow a greater travel distance. Other components that would be affected by the greater travel of the suspension systems would, of course, also need to be replaced to take into account this greater travel distance. One such component affected by the greater travel would be the linkage arm noted above and/or the bracket that attaches the linkage arm to the suspension system. As noted above, replacing the linkage arm with a replacement linkage arm would not necessitate replacing the bracket while replacing the bracket would not necessitate replacing the linkage arm. As well, the linkage arm may be replaced with a suitable linear actuator.

Regarding implementation, experiments have shown that John Deere self-propelled sprayers models R4030, R4038, and R4045 are suitable for use with the invention. For these models of sprayers, the spindle (John Deere part number KK26139) and the air spring or absorber (John Deere part number AKK12461) would need to be replaced. Additionally, the linkage arm (John Deere part number AN403729) may need to be replaced (with either a longer linkage arm or a linear actuator) if the original bracket is to be retained. However, if the bracket is to be replaced, the original linkage arm may be retained. Of course, both the bracket and the linkage arm may both be replaced.

A person understanding this invention may now conceive of alternative structures and embodiments or variations of the above all of which are intended to fall within the scope of the invention as defined in the claims that follow.

## Claims

1. A kit for retrofitting farm equipment, said farm equipment having a suspension system that includes original spindles, original spring mechanisms, and at least one original linkage arm, the kit comprising:
at least one pair of replacement spindles for replacing said original spindles, said replacement spindles being longer than said original spindles;
at least one replacement spring mechanism for replacing said original spring mechanisms on said suspension system;
wherein
after said kit has been installed on said farm equipment, said farm equipment has a higher ground clearance;
said higher ground clearance is partially due to more travel by said suspension system when said at least one replacement spring mechanism has been installed.

2. The kit according to claim 1, further comprising at least one replacement linkage arm for replacing said at least one original linkage arm installed on said farm equipment, said at least one replacement linkage arm being longer than said original linkage arm.

3. The kit according to claim 1, further including at least one travel limiting device for limiting a range of movement of said suspension system.

4. The kit according to claim 3, wherein said at least one travel limiting device comprises at least one of: bumpers, stops, and spacers.

5. The kit according to claim 1, wherein said farm equipment is a sprayer.

6. The kit according to claim 1, wherein said farm equipment is a self-propelled sprayer.

7. The kit according to claim 1, further comprising at least one linear actuator for use in replacing at least one original linkage arm installed on said farm equipment.

8. The kit according to claim 1, further comprising at least one replacement bracket, said replacement bracket having multiple connection points for attaching a linkage arm to said suspension system, said multiple connection points compensating for said higher ground clearance.

9. A method for retrofitting farm equipment, the method comprising:
locating at least one original spindle installed on said farm equipment, said at least one original spindle being installed on a suspension system of said farm equipment;
removing said at least one original spindle;
replacing said at least one original spindle with at least one replacement spindle, said at least one replacement spindle being longer than said at least one original spindle;
locating at least one original spring mechanism installed as part of said suspension system on said farm equipment;
replacing said at least one original spring mechanism with at least one replacement spring mechanism, said at least one replacement spring mechanism allowing more travel of said suspension system than said at least one original spring mechanism.

10. The method according to claim 9, further including:
locating at least one original linkage arm installed on said farm equipment;
replacing said at least one original linkage arm with at least one replacement linkage arm, said at least one replacement arm being longer than said at least one original linkage arm.

11. The method according to claim 9, further including:
locating a bracket that attaches an original linkage arm to said suspension system; and
replacing said bracket with a replacement bracket having multiple connection points.

12. The method according to claim 11, further including:
connecting said original linkage arm to said replacement bracket using one of said multiple connection points to thereby compensate for a higher ground clearance of said farm equipment.

13. The method according to claim 11, further including:
connecting said original linkage arm to said replacement bracket using one of said multiple connection points to thereby compensate for a higher ground clearance of said farm equipment.

14. The method according to claim 11, further including:
connecting a linear actuator to said replacement bracket using one of said multiple connection points to thereby replace said original linkage arm, or
connecting a replacement linkage arm to said replacement bracket using one of said multiple connection points to thereby replace said original linkage arm.

15. The kit according to claim 7 wherein said at least one linear actuator is one of:
a pneumatic linear actuator; and
an electric linear actuator.
